# EUROPÄISCHE PATENTSCHRIFT

(11) **EP 2 399 459 B1**
(45) Veröffentlichungstag und Bekanntmachung des Hinweises auf die Patenterteilung: **12.08.2015**
(21) Anmeldenummer: 11170798.0
(22) Anmeldetag: 21.06.2011
(51) Int. Cl.: A21B 1/04, F24B 1/22, F24B 5/06, F24B 5/08

(54) **Holzbackofen**
Wood baking oven
Four à bois

(30) Priorität: 22.06.2010 DE 102010017507
(43) Veröffentlichungstag der Anmeldung: 28.12.2011
(73) Patentinhaber: Ramster, Vanessa, 66957 Vinningen (DE)
(72) Erfinder: Ramster, Vanessa, 66957 Vinningen (DE)
(74) Vertreter: 2K Patentanwälte Blasberg Kewitz & Reichel

(56) Entgegenhaltungen:
- WO-A1-99/05457
- DE-A1- 2 629 310
- DE-A1- 3 425 422
- DE-A1- 3 809 376
- DE-A1- 10 147 384
- FR-A1- 2 383 636
- FR-A1- 2 562 213
- US-A1- 2010 147 281

## Beschreibung

Die Erfindung betrifft einen Holzbackofen nach dem Oberbegriff des Anspruchs 1. Insbesondere betrifft die Erfindung einen Holzbackofen, der mindestens einen mit Holz befeuerbaren Backraum mit einer Backfläche und ein darüber angeordnetes, aus einem feuerfesten Baustoff gebildetes Backgewölbe aufweist.

Holzbacköfen mit Backgewölbe sind üblicherweise so aufgebaut, dass der Backraum auch gleichzeitig als Feuerraum dient. Zunächst wird im Backraum ein Feuer aus Holz angezündet, so dass die zumeist aus feuerfesten Materialien bestehenden Wände und das Deckengewölbe des Backraums sich aufheizen. Bei Erreichen einer ausreichend hohen Hitze bzw. nach Abbrennen des Heizmaterials werden der Backraum ausgeräumt und die Backfläche befeuchtet. Danach kann man den Backraum zum Backen nutzen, wobei die in den Seitenwänden und im Gewölbe gespeicherte Hitze genutzt wird.

Aus der DE 20 2005 019 247 U1 ist beispielsweise ein Holzbackofen bekannt, der einen mit Holz befeuerbaren Backraum aufweist. Dieser besteht aus einer unteren Backfläche und einem darüber angeordneten Backgewölbe, das aus feuerfestem Baustoff gefertigt ist. Der dortige Holzbackofen wird durch Zusammenfügen und Mauern verschiedener Bauteile aufgebaut und kann im Freien, z.B. in Gärten oder Hofanlagen, aufgestellt werden.

Als Alternative zu solchen fest vermauerten Backöfen sind auch Holzbacköfen ohne Gewölbe bekannt, die oftmals transportable sind und aus einem Stahlgehäuse bestehen. Darin ist ein Backraum ausgebildet, der in der Regel oberhalb eines Feuerraums liegt. Der Feuerraum wird mit Holz befeuert und gibt Hitze in den darüber liegenden Backraum ab. Dort befindet sich häufig ein flacher als Backfläche genutzter Stein, auf dem dann Brot, Pizza, Flammkuchen und dergleichen gebacken werden kann.

Solche und ähnliche Holzbacköfen werden auch in DE 203 17 621 U1, DE 10 2004 025 183 A1 oder US 554,396 beschrieben.

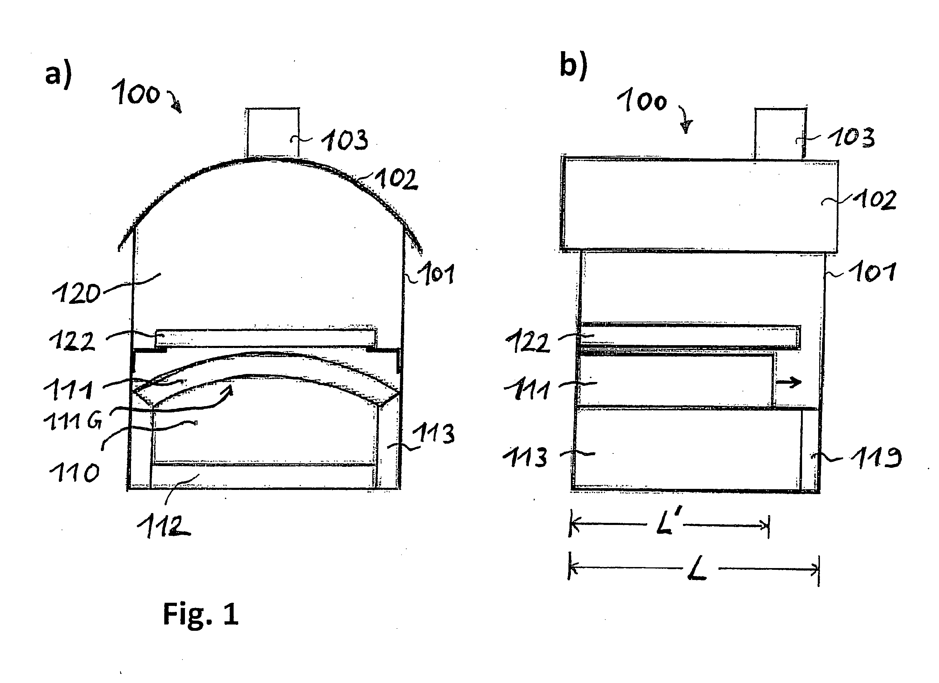

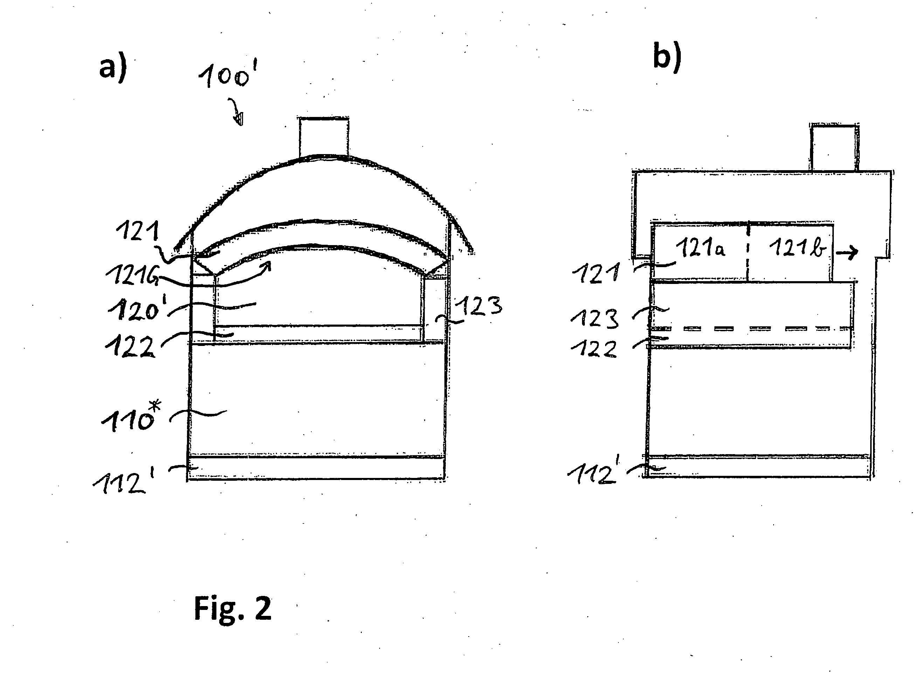

Aus der DE 41 92 745 C2 ist ein kombinierter Back- und Heizofen bekannt, bei dem der Backraum ein Backgewölbe (siehe dort "gewölbte Decke 12" in Fig. 1 und 2) aufweist, die aus feuerfesten zu einem Gewölbe zusammengefügten Steinen besteht. Die Länge der Steine ist sehr viel kürzer als die Baulänge (Tiefe) des Ofengehäuses. Die Steine sind fest in das Ofengehäuse eingesetzt. Wie dort in Spalte 2, zweiter Abs. beschrieben wird, können bei diesem Back- und Heizofen die Backfunktion und die Heizfunktion unabhängig voneinander genutzt werden.

Weitere Bauformen von Backöfen oder kombinierten Back- und Heizöfen werden in folgenden Druckschriften offenbart: DE 34 25 422 A1, DE 264 369 A, DE 203 17 620 U1, DE 203 03 184 U1, FR 2 709 923 A1 und US 4 095 586 A.

Die Gewölbeöfen haben gegenüber den Öfen ohne Gewölbe den Vorteil, dass der Backraum auch selbst beheizt werden kann und aufgrund des sich aufheizenden Gewölbes eine lang andauernde und sich auf den Backraum konzentrierende Wärmeerzeugung liefern können.

Aufgabe der vorliegenden Erfindung ist es, die Vorteile von Gewölbeöfen mit denen von Öfen ohne Gewölbe zu vereinen. Insbesondere soll ein Holzbackofen der eingangs genannten Art dahingehend verbessert werden, dass er auch einen befeuerbaren Backraum aufweist, der auch als Backgewölbe ausgebildet ist, wobei der Holzbackofen an sich auch mit einem aus Stahl oder Metall gefertigten Ofengehäuse versehen sein kann.

Gelöst wird die Aufgabe durch einen Holzbackofen mit den Merkmalen des Anspruchs 1. Demnach wird vorgeschlagen, dass der Holzbackofen mindestens einen Backraum mit einem darin ausgebildeten Backgewölbe aufweist, wobei das jeweilige Backgewölbe aus mindestens einem feuerfesten, gewölbeförmigen Stein ist, der eine Länge aufweist, die um mindestens 10% kürzer als die Länge (Tiefe) des Ofengehäuses ist, und wobei der mindestens eine gewölbeförmige Stein innerhalb des Ofengehäuses (101) verschiebbar gelagert ist. Vorzugsweise wird dazu ein einteiliger oder mehrteiliger Schamottestein in gewölbter Form vorgeschlagen. Der jeweilige Schamottestein ist z.B. auf Winkelschienen verschiebbar in dem Ofengehäuse angeordnet. Der Schamottestein kann auch auf seitlich angebrachten Steinen oder auf der Bodenplatte verschiebbar angeordnet sein.

Demnach können auch bereits bestehende Öfen ohne Gewölbe nun auch nachträglich mit einem Backgewölbe versehen werden. Dieses aus dem feuerfesten, gewölbeförmigen Stein gebildete Gewölbe kann zum Beispiel bei einem Holzbackofen mit Stahlgehäuse in den unteren Feuerraum oder in den oberen Backraum eingefügt werden. Da das Gewölbe bzw. der Gewölbe-Stein vorzugsweise 10-20% kürzer als der Ofen ist, ergeben sich viele Möglichkeiten der optimierten Wärmeverteilung. Beispielsweise kann durch Positionieren des Gewölbe-Steins im Feuerraum in Richtung Frontseite des Ofens ein Spalt zur Rückwand hin geschaffen werden, durch welchen die Wärme und die Rauchgase nach oben gelangen können. Dadurch ist es möglich, bei gleichzeitiger Feuerung im unteren Raum, ein Backen auf der oberen Fläche, also der eigentlichen Backfläche, zu gewährleisten. Sobald dann im unteren Raum, das heißt in dem Backgewölbe, die Feuerung beendet werden kann, kann auch dieser Raum als Backraum genutzt werden. Während der Befeuerung ist es aufgrund der Luftführung durch den hinteren Spalt möglich, das Backgut im oberen Backraum mit Flammen zu überbacken.

Durch Verschieben des Gewölbe-Steins in Richtung Rückwand wird das rückwandige Beheizungssystem nahezu geschlossen, so dass dort keine Flammen mehr nach oben an die obere Backfläche gelangen können. Gleichzeitig bleibt die Hitze länger im unteren Bereich, was dazu ausgenutzt werden kann, um auch im unteren Bereich nach Ausräumen der Glut backen zu können. Das verkürzte und verschiebbare Gewölbe von z.B. 30 cm ist um mindestens 10% kürzer als die Ofentiefe von z.B. 50 cm. Durch das verkürzte Gewölbe, welches sich in dem Backofengehäuse von vorne nach hinten verschieben lässt und umgekehrt, ist es auch möglich, im unteren Raum, mit einem in Richtung Frontseite geschobenen Gewölbe zu feuern, wobei nach Erreichen einer bestimmten Temperatur der Feuerraum von dem brennenden Material und der Glut gesäubert wird, um dann im unteren Feuerraum das Backgut (Brot, Flammkuchen und dergleichen) zu backen und gleichzeitig auf der oberen Backfläche beispielsweise Fleisch zu backen. Diese und weitere Einsatzmöglichkeiten werden anhand der in den beiliegenden Zeichnungen dargestellten Ausführungsbeispiele beschrieben. Vorteilhafte Ausgestaltungen ergeben sich aus den Unteransprüchen.

Demnach ist es vorteilhaft, einen Holzbackofen der erfindungsgemäßen Art zu bauen, so dass dieser mindestens zwei übereinander angeordnete Backräume aufweist, von denen zumindest der untere Backraum den gewölbeförmigen Stein aufweist, welcher in das Ofengehäuse einfügbar ist. Vorzugsweise hat der Holzbackofen genau zwei übereinander angeordnete Backräume, von denen jeder ein dort einsetzbares und verschiebbares Gewölbe aus feuerfestem Material, insbesondere aus Schamottestein, aufweist, wobei die Länge des jeweiligen Gewölbe-Steins 10-20% kürzer ist als die Länge des Ofengehäuses. Dadurch kann die Wärmeverteilung auch über zwei Backebenen hinweg optimal eingestellt werden. Die auf den verschiedenen Ebenen und/oder Positionen eigesetzten Gewölbe können dieselbe Länge aufweisen, können aber auch unterschiedliche Längen aufweisen. Beispielsweise kann die Länge des Gewölbe-Steins im oberen Backraum kürzer als die Länge des Gewölbe-Steins im unteren Backraum sein, so dass sich zum oberen Bereich des Holzofens noch mehr Hitze verteilt. Der aus feuerfestem Schamottestein gebildete gewölbeförmige Stein ist innerhalb des Ofengehäuses verschiebbar angeordnet, so dass er insbesondere bis zur Frontseite oder zur Rückseite des Ofens verschoben werden kann. Wird der Schamottestein zur Frontseite des Ofens hin verschoben, so verbleibt auf der Rückseite ein Spalt, welcher die vom unteren Feuer- und Backraum kommende Hitze besser nach oben verteilt.

Nachfolgend wird die Erfindung anhand von Ausführungsbeispielen und unter Zuhilfenahme der beiliegenden schematischen Zeichnungen beschrieben, die folgendes darstellen:
- Die Figur 1: zeigt in Teilansichten a) und b) einen Holzbackofen gemäß einer ersten Ausführungsform, bei der ein befeuerbarer Backraum mit Gewölbe vorgesehen ist.
- Die Figur 2: zeigt in Teilansichten a) und b) einen Holzbackofen gemäß einer zweiten Ausführungsform, bei der im oberen Teil des Ofengehäuses ein befeuerbarer Backraum mit Gewölbe vorgesehen ist, der oberhalb eines unteren Stauraums liegt, der ebenfalls befeuerbar sein kann.
- Die Figur 3: zeigt in Teilansichten a) und b) ein Holzbackofen gemäß einer dritten Ausführungsform, bei der zwei übereinanderliegende befeuerbare mit Gewölben versehene Backräume angeordnet sind.

Die Figur 1 zeigt in einer ersten Ausführungsform den Aufbau eines erfindungsgemäßen Holzbackofens 100, der ein aus Stahlblech gebildetes Ofengehäuse 101 aufweist, das wiederum ein gewölbtes Dach 102 und einen dort vorgesehenen Abzug bzw. Schornstein 103 aufweist. Das Dach kann beliebig, z.B. auch als Satteldach, gestaltet sein. Im oberen Teil des Ofengehäuses 101 befindet sich eine Backfläche 120, die im Wesentlichen aus einem flachen Schamottestein besteht, der somit auch als Bodenplatte für den oberen Backraum 120 dient. Dieser flache Schamottestein 122 liegt auf Winkeln auf, die sich an der inneren Ofenwand befinden, und ist kürzer als die Ofenlänge. Im unteren Teil des Gehäuses 101 ist ein befeuerbarer Backraum 110 ausgebildet, der ebenfalls eine aus Schamottestein gebildete Backfläche 112 aufweist, wobei sich über dieser Backfläche ein Gewölbe 111G erhebt, das aus mindestens einem geformten Schamottestein 111 gebildet ist. Erfindungsgemäß kann der gewölbte Schamottestein 111 in das Gehäuse eingesetzt bzw. eingefügt werden, wobei er beispielsweise auf seitlichen Wandelementen 113 aufgelegt wird. Der gewölbte Schamottestein 111, im Weiteren auch Gewölbe-Stein genannt, ist um mindestens 10% kürzer als die Baulänge des Ofens und kann nach vorn und hinten verschoben werden.

Wie die Figur 1b) in einer Querschnittsansicht zeigt hat der Ofen eine Gesamtbaulänge L von beispielsweise 50 cm. Es sind auch größere Baulängen von z.B. 80 cm oder mehr möglich. Das aus dem Schamottestein 111 gebildete Gewölbe 111G hat eine kürzere Baulänge L, nämlich von z.B. 30 cm. Der Gewölbe-Stein 111 ist innerhalb des Ofengehäuses 101 verschiebbar, so dass er bzw. das Gewölbe beispielsweise mit der Frontseite des Ofens abschließt (siehe Figur 1b). Dadurch bildet sich im hinteren Teil ein Abstand bzw. Spalt zwischen dem Gewölbe-Stein 111 und der Rückwand des Gehäuses 101 aus, durch den die im unteren Bereich erzeugte Hitze nach Oben in den Backraum 120 oberhalb der dortigen Backfläche 122 gelangen kann. Der Gewölbe-Stein 111 kann auch nach hinten verschoben werden (siehe Pfeil in Fig. 1b), um dann mit der Rückseite des Ofens abzuschließen. Dadurch wird erreicht, dass mehr Hitze im Backraum 113 verbleibt und der Ofen dann insbesondere zum Backen von Brot geeignet ist.

Die Backfläche 122, die vorzugsweise auch aus einem flachen Schamottestein gebildet wird, wird im Wesentlichen durch Konvektionswärme von dem darunterliegenden Backraum 110 erhitzt. Durch die zwischen dem Schamottestein bzw. Gewölbe-Stein 111 und der Rückwand des Gehäuses 101 sich ausbildende Lücke bzw. Spalt gelangt Hitze und gegebenenfalls auch Feuer von dem unteren Feuer- und Backraum 110 in den Backraum 120 hinein. Mit diesem Aufbau lassen sich beispielsweise im unteren Backraum 110 Brote und dergleichen backen (nach Ausräumen der Holzglut); in dem oberen Backraum 120, der hier nicht als Feuerraum dient, lässt sich beispielsweise sehr gut Fleisch auf der dortigen Backfläche 122 zubereiten. Dies kann beispielsweise durch das sogenannte "Low and Slow" -Verfahren erfolgen, also geringe Temperatur und langsames Backen. Der obere Bereich, das heißt der Backraum 120 selbst, kann durch zusätzliches Einlegen von Schamottesteinen auch zum Dünsten von Gemüse oder Dörren von Obst und dergleichen verwendet werden.

Die Figur 2 zeigt in Teilansichten a) und b) eine zweite Ausführungsform des Holzbackofens 100', bei der sich im oberen Teil des Ofengehäuses ein befeuerbarer Backraum 120' befindet, der mit einem Gewölbe 121G ausgestattet ist. Unterhalb des Backraums 120' befindet sich ein Raum 110*, der als reiner Feuerraum genutzt wird. Dieser Raum kann aber auch als Stauraum für Brennmaterial genutzt werden. Auch bei diesem Beispiel ist das Gewölbe 121G aus mindestens einem in den Ofen einfügbaren und verschiebbar gelagerten Gewölbe-Stein 121 bzw. Schamottestein gefertigt. Der gewölbte Stein kann einstückig sein, besteht hier allerdings aus zwei Teilen (bzw. einzelnen Schamottesteinen (s. gestrichelte Linie bei "121" in Fig. 2b), deren Gesamt-Länge um mindestens 10% kürzer als die Länge des Backofengehäuses ist. Wenn der Ofen eine Länge von z.B. 80 cm aufweist, dann hat jeder Gewölbe-Stein 121a bzw. 121b eine Länge von z.B. 30 cm. Durch das Einrichten eines derart modular zusammen gesetzten Gewölbes 121G wird hier in dem entsprechenden Backraum 120' nicht nur eine deutlich bessere Oberhitze erzeugt, die das Backergebnis weiter verbessert, sondern auch eine Modifizierbarkeit geschaffen, mit der unterschiedlichste Backanforderungen erfüllt werden können. Beispielsweise kann der zweite Gewölbe-Stein 121b nach hinten verschoben werden, so dass in der Mitte (Strichlinie in Fig. 2b)) eine Lücke entsteht, durch die Hitze nach oben entweicht. Bei zusätzlicher Befeuerung von unten im Raum 110* wird dann der hintere Bereich im Backraum 120' besonders stark erhitzt und kann z.B. zum Backen von Vollkornbrot genutzt werden, wohingegen der vordere Bereich zum Backen von Weißbrot genutzt werden kann. Allerdings ist die in Fig. 2 dargestellte Konstruktion noch besser zum Backen von Pizzen oder Flammkuchen und dergleichen geeignet.

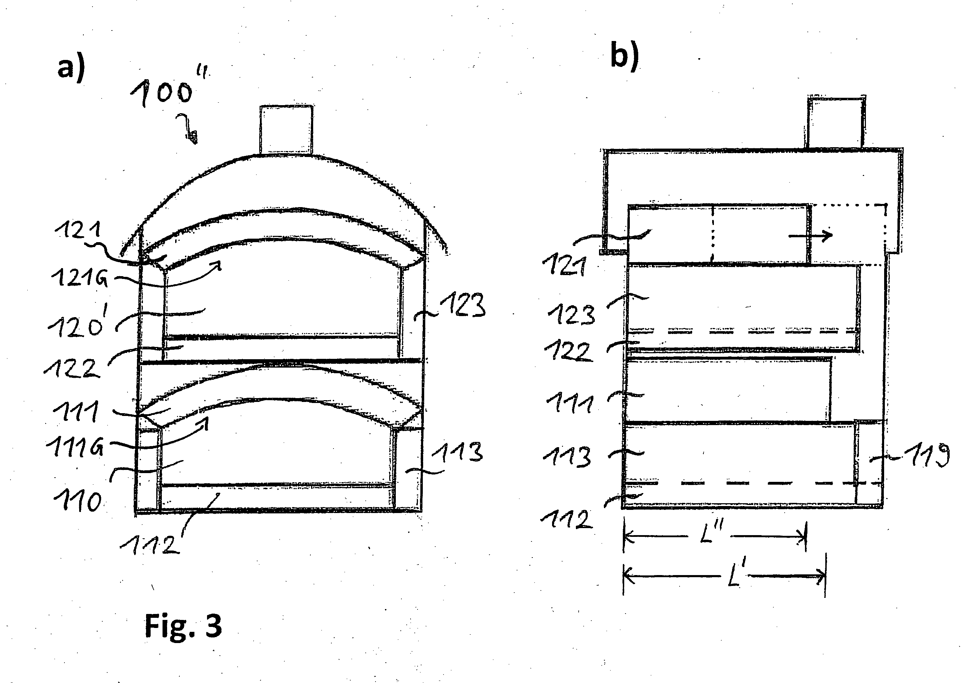

Die Figur 3 zeigt in Teilansichten a) und b) eine dritte Ausführungsform für einen Holzbackofen 100", der zwei übereinander angeordnete Backräume 110" und 120" aufweist. Beide Backräume sind mit jeweils einem Gewölbe 111G bzw. 121G versehen, die aus gewölbten Schamottesteinen 111 bzw. 121 gebildet sind, welche in das Ofengehäuse eingefügt wurden und dort verschoben werden können. Wie in der Figur 3a) dargestellt, geschieht dies beispielsweise dadurch, dass der formgewölbte Schamottestein 111 bzw. 121 auf seitliche Wandteile 123 aufgelegt wird. Auch hier sind die Gewölbe-Steine 111 und 121 kürzer ausgeführt als die Gesamtlänge des Ofengehäuses, die z.B. 50 cm beträgt. Dadurch können die Gewölbe-Steine von Vorne nach Hinten und umgekehrt im Gehäuse verschoben werden. In dem hier gezeigten Beispiel hat das obere Gewölbe 121G bzw. der Gewölbe-Steine 121 eine Baulänge L" von nur 20 cm, die hier beispielsweise kürzer ist als die Baulänge L' (30 cm) des unteren Gewölbes 111G bzw. Gewölbe-Steins 111. Dadurch ergibt sich eine besonders gute Wärmeverteilung. Beide Gewölbe-Steine 111 und 121 können aber auch dieselbe Länge aufweisen. Außerdem kann jedes Gewölbe auch aus einem Stein bzw. Teil gefertigt sein, der an den Seiten sich nach unten bis zur jeweiligen Backfläche hin erstreckt, also ohne seitliche Steine 113 bzw. 123 auskommt. Wie durch den Pfeil in Fig. 3b angedeutet wird, kann der obere Gewölbe-Steine 121 beispielsweise nach Hinten verschoben werden; der untere Gewölbe-Steine 111 bleibt jedoch in der vorderen Position. Dadurch ergibt sich eine meanderartige Hitzebewegung nach oben, bei der die Hitze aus dem unteren Backraum 110 im hinteren Ofenbereich nach oben abzieht und dann in den oberen Backraum 120' gelangt, wo sie zwangsgeleitet über das Backgut hinweg nach Vorne zieht, um dann im vorderen Ofenbereich zum Schornstein bzw. Abzug hin zu entweichen.

Bei dem hier in Figur 3 dargestellten Beispiel handelt es sich um einen Holzbackofen, der sowohl Unten wie auch Oben jeweils einen Backraum mit Gewölbe aufweist. Dadurch kann sowohl im unteren Backraum 110 wie auch im oberen Backraum 120' gebacken werden. Durch Positionierung der jeweiligen Gewölbe-Steine 111 bzw. 121 nach vorne und hinten lassen sich verschiedene Temperaturen und Wärmespeichermöglichkeiten schaffen. Im unteren Bereich kann beispielsweise der untere Teil des dortigen Backraums 110 auf der Rückseite ebenfalls mit einem Schamottestein 119 abgeschlossen werden.

Zusammenfassend wird ein Holzbackofen mit mindestens einem mit Holz befeuerbaren Backraum vorgeschlagen, der eine Backfläche und ein darüber angeordnetes aus einem feuerfesten Baustoff gebildetes Backgewölbe aufweist. Das jeweilige Backgewölbe ist aus einem feuerfesten, gewölbeförmigen Stein gebildet, dessen Länge um mindestens 10% kürzer als die Länge des Ofengehäuses ist und der in dem Ofengehäuse verschiebbar gelagert ist.

Insgesamt wird mit der hier vorliegenden Erfindung ein sehr modulares und individuell aufbaubares Ofensystem vorgeschlagen. Dabei werden die Vorteile eines klassischen Gewölbeofens wie auch eines Holzbackofens ohne Gewölbe miteinander vereint. Die modulare Aufbauweise ermöglicht eine individuelle Gestaltung von Holzbacköfen. Beispielsweise kann der Holzbackofen auch in einem transportablen Stahlgehäuse realisiert werden. Die Gewölbe-Steine können separat transportiert werden, um sie erst vor Ort einzusetzen.

Durch die verkürzte Länge der hier eingesetzten Gewölbe bzw. formgewölbten Schamottesteine können diese in dem Ofengehäuse beliebig verschoben werden. Dies wiederum ermöglicht eine variantenreiche Einstellung der Zirkulation und Wärmeverteilung im Ofen. Vorzugsweise besteht das hier eingesetzte Gewölbe aus einem einstückigen Schamottestein. Es kann aber auch aus zwei- oder mehrstückigen Schamottesteinen zusammengesetzt werden. Die Anordnung der Backraumgewölbe muss nicht übereinander erfolgen, sondern kann auch nebeneinander erfolgen, so dass z.B. ein Ofen mit 2x2 Backräumen ausgestaltet wird, d.h. mit jeweils zwei nebeneinander liegenden Backräumen auf zwei Ebenen. Wie auch anhand der obigen Ausführungsformen zu sehen ist, sind die Variationsmöglichkeiten sehr groß.

### Bezugszeichenliste

- 100: Holzbackofen (erste Ausführungsform) mit:
- 110: erstem (unteren) befeuerbaren Backraum, d.h. Feuer- und Backraum
- 120: zweitem (oberen) nicht befeuerten Backraum, d.h. reinem Backraum
- 100': Holzbackofen (zweite Ausführungsform) mit:
- 110*: unterem Ofenraum (hier: reiner Feuerraum)
- 120: oberem befeuerbaren Backraum
- 100": Holzbackofen (dritte Ausführungsform) mit:
- 110: erstem (unteren) befeuerbaren Backraum
- 120: zweitem (oberen) befeuerbaren Backraum
- 101: Ofengehäuse (hier aus Stahl)
- L: Länge des Ofengehäuses
- 102: Ofenhaube bzw. Gehäusedach
- 103: Schornstein bzw. Abzug
- 111G, 121G: unteres bzw. oberes Backgewölbe
- 111: feuerfester Stein (Schamottestein) für ersten Backraum (unteres Backgewölbe)
- 121: feuerfester Stein (Schamottestein) für zweiten Backraum (oberes Backgewölbe)
- L`, L``: Länge des jeweiligen Schamottesteins
- 113: seitliche Schamottesteine für Backraum-Seitenwänder
- 119: hinterer Schamottestein für Backraum-Rückwand
- 122: Backfläche im Backraum 120

## Patentansprüche

1. Holzbackofen (100) mit einem Ofengehäuse (101) und mindestens einem mit Holz befeuerbaren Backraum (110; 120'), der eine Backfläche (112; 122) und ein darüber angeordnetes aus einem feuerfesten Baustoff gebildetes Backgewölbe (111G; 121G) aufweist, wobei das Backgewölbe aus mindestens einem feuerfesten, gewölbeförmigen Stein (111, 121) gebildet ist, **dadurch gekennzeichnet,**
**dass** der mindestens eine gewölbeförmige Stein (111; 121) eine Länge (L') aufweist, die um mindestens 10% kürzer als die Länge (L) des Ofengehäuses (101) ist, und das der mindestens eine gewölbeförmige Stein (111; 121) in das Ofengehäuse (101) einfügbar und innerhalb des Ofengehäuses (101) verschiebbar ausgebildet ist.

2. Holzbackofen (100) nach Anspruch 1, **dadurch gekennzeichnet, dass** das mindestens eine Backgewölbe (111G; 121G) jeweils aus einem ein- oder mehrteiligen Schamottestein (111; 121) gebildet ist.

3. Holzbackofen (100') nach Anspruch 1 oder 2, **dadurch gekennzeichnet, dass** der Holzbackofen (100') mindestens zwei übereinander angeordnete Backräume (110, 120) aufweist, von denen zumindest der untere Backraum (110) den in das Ofengehäuse (101) einfügbaren feuerfesten, gewölbeförmigen Stein (111) aufweist.

4. Holzbackofen (100") nach Anspruch 3, **dadurch gekennzeichnet, dass** der Holzbackofen (100") zwei übereinander angeordnete Backräume (110, 120') aufweist, von denen jeder Backraum (110, 120') einen in das Ofengehäuse (101) einfügbaren feuerfesten, gewölbeförmigen Stein (111, 121) aufweist, deren jeweilige Länge (L', L") kürzer als die Länge (L) des Ofengehäuses (101) ist.

5. Holzbackofen (100) nach Anspruch 4, **dadurch gekennzeichnet, dass** die Länge (L") des zum oberen Backraum (120') gehörigen gewölbeförmigen Steins (121) kürzer ist als die Länge (L') des zum unteren Backraum (120) gehörigen gewölbeförmigen Steins (111).

6. Holzbackofen (100) nach einem der vorhergehenden Ansprüche, **dadurch gekennzeichnet, dass** der jeweilige das Backgewölbe bildende feuerfeste, gewölbeförmige Stein (111; 121) auf Winkelschienen innerhalb des Ofengehäuses (101) verschiebbar gelagert ist.

7. Holzbackofen (100) nach einem der vorhergehenden Ansprüche, **dadurch gekennzeichnet, dass** hinter dem zu dem mindestens einen Backraum, insbesondere hinter dem zu dem unteren Backraum (120), gehörigen gewölbeförmigen Steins (111), ein Abschlussstein (119) aus feuerfestem Material angeordnet ist, der den Backraum (120) nach hinten abschließt.

8. Holzbackofen (100) nach einem der vorhergehenden Ansprüche, **dadurch gekennzeichnet, dass** der mindestens eine gewölbeförmige Stein (111; 121) eine Länge (L') aufweist, die um höchstens 20% kürzer als die Länge (L) des Ofengehäuses (101) ist.

9. Holzbackofen (100) nach einem der vorhergehenden Ansprüche, **dadurch gekennzeichnet, dass** der Backofen eine Gesamtbaulänge (L) von 40-100 cm aufweist und dass der jeweilige das Backgewölbe bildende feuerfeste, gewölbeförmige Stein (111; 121) eine kürzere Länge (L'; L") von 20-80 cm aufweist.

10. Holzbackofen (100) nach Anspruch 8, **dadurch gekennzeichnet, dass** der jeweilige das Backgewölbe bildende feuerfeste, gewölbeförmige Stein (121) aus zwei Teilen (121a, 121b) besteht, die jeweils eine Länge 10-40 cm aufweisen.

## Claims

1. Wood oven (100) with an oven housing (101) and at least one wood-fired baking chamber (110; 120') having a baking area (112; 122) and, arranged above, having a baking vault (111G; 121G) being built from fireproof material, wherein the baking vault is built from at least one fireproof vault-shaped stone (111, 121), **characterized in that**
the at least one vault-shaped stone (111; 121) has a length (L') that is shorter by at least 10% than the length (L) of the oven housing (101), and that the at least one vault-shaped stone (111; 121) is configured to be insertable into the oven housing (101) and slidable within the oven housing (101).

2. Wood oven (100) according to claim 1, **characterized in that** the at least one baking vault (111G; 121G) is configured to consist of a single or multi-part fireclay brick (111; 121).

3. Wood oven (100') according to claim 1 or 2, **characterized in that** the wood oven (100') comprises at least two baking chambers (110, 120) being arranged one above the other, wherein at least the lower baking chamber (110) comprises the fireproof vault-shaped stone (111) being inserted into the oven housing (101).

4. Wood oven (100") according to claim 3, **characterized in that** the wood oven (100") comprises at least two baking chambers (110, 120') being arranged one above the other, wherein each of said baking chambers (110, 120') comprises a fireproof vault-shaped stone (111, 121) being insertable into the oven housing (101) and having a length (L', L") that is shorter than the length (L) of the oven housing (101).

5. Wood oven (100) according to claim 4, **characterized in that** the length (L') of the vault-shaped stone (121) belonging to the upper baking chamber (120') is shorter than the length (L') of the vault-shaped stone (111) belonging to the lower baking chamber (120).

6. Wood oven (100) according to any of the preceding claims, **characterized in that** the each fireproof vault-shaped stone (111; 121) building the respective baking vault is slidably put on angular rails inside the oven housing (101).

7. Wood oven (100) according to any of the preceding claims, **characterized in that** behind the vault-shaped stone (111; 121) belonging to the at least one baking chamber, in particular to the lower backing chamber (120), a termination stone (119) made of fireproof material is put to close the baking chamber (120) to the rear end.

8. Wood oven (100) according to any of the preceding claims, **characterized in that** the at least one vault-shaped stone (111; 121) has a length (L'), which is at most 20% shorter than the length (L) of the oven housing (101).

9. Wood oven (100) according to any of the preceding claims, **characterized in that** the oven has an overall length (L) of 40-100 cm and that the respective fireproof vault-shaped stone (111; 121) building the baking vault has a shortened length (L'; L") of 20-80 cm.

10. Wood oven (100) according to claim 8, **characterized in that** the respective fireproof vault-shaped stone (121) building the baking vault consists of two parts (121 a, 121b) which each have a length of 10-40 cm.

## Revendications

1. Four à bois (100) avec un logement de four (101) et au moins une chambre de cuisson à bois (110; 120 ') ayant une surface de cuisson (112; 122) et disposé au-dessus, avec une voûte de cuisson (111G ; 121G) fait de matériau réfractaire, dans lequel la voûte de cuisson est réalisée au moins à partir d'une pierre réfractaire en forme de voûte (111, 121), **caractérisé en ce que** :
la ou les pierre(s) réfractaire en forme de voûte (111 ; 121) présente une longueur (L') qui est plus courte d'au moins 10% que la longueur (L) du logement de four (101), et **en ce que** la ou les pierre(s) en forme de voûte (111 ; 121) est(sont) configurée(s ) pour s'insérer dans le logement de four (101) et pouvant coulisser au sein du logement de four (101).

2. Four à bois (100) selon la revendication 1, **caractérisé en ce que** la ou les voûte(s) de cuisson (111G; 121G) est(sont) configurée(s) sous forme d'une ou plusieurs brique réfractaire, simple ou en plusieurs éléments.

3. Four à bois (100 ') selon la revendication 1 ou 2, **caractérisé en ce que** le four à bois (100') comprend au moins deux chambres de cuisson (110, 120) superposées, dont au moins la chambre de cuisson inférieure (110) comporte la pierre réfractaire en forme de voûte (111) insérée dans le logement de four (101).

4. Four à bois (100 ") selon la revendication 3, **caractérisé en ce que** le four à bois (100") comporte au moins deux chambres de cuisson superposées (110, 120 '), dont chacune desdites chambres de cuisson (110, 120') comporte une pierre réfractaire en forme de voûte (111, 121) pouvant s'insérer au sein du logement de four (101) et ayant une longueur (L ', L') plus courte que la longueur (L) du logement de four (101).

5. Four à bois (100) selon la revendication 4, **caractérisé en ce que** la longueur (L ') de la pierre en forme de voûte (121) du four supérieur (120') est plus courte que la longueur (L ') de la pierre en forme de voûte (111) de la chambre de cuisson inférieure (120).

6. Four à bois (100) selon l'une quelconque des revendications précédentes, **caractérisé en ce que** chacune des pierres réfractaire en forme de voûte (111 ; 121) composant la chambre de cuisson respective est disposée de manière coulissante sur des rails angulaires à l'intérieur du logement de four (101).

7. Four à bois (100) selon l'une quelconque des revendications précédentes, **caractérisé en ce que**, à l'arrière de la pierre en forme de voûte (111 ; 121) appartenant à une au moins des chambres de cuisson, et notamment la chambre de cuisson inférieure (120), une pierre de terminaison (119) faite en matériau réfractaire est disposée de manière à fermer la chambre de cuisson (120) sur l'extrémité arrière.

8. Four à bois (100) selon l'une quelconque des revendications précédentes, **caractérisé en ce que** la ou les pierre(s) en forme de voûte (111; 121) présente une longueur (L ') qui est plus courte de 20% au maximum que la longueur (L) du logement de four (101),

9. Four à bois (100) selon l'une quelconque des revendications précédentes, **caractérisé en ce que** le four d'une longueur totale (L) de 40-100 cm et que la pierre réfractaire en forme de voûte (111; 121) constituant la voûte de cuisson présente une longueur plus courte (L'; L ") de 20 à 80 cm.

10. Four à bois (100) selon la revendication 8, **caractérisé en ce que** la pierre réfractaire en forme de voûte respective (121) composant la voûte de cuisson comporte deux parties (121a, 121b), ayant chacune une longueur de 10-40 cm.
